# EUROPÄISCHE PATENTSCHRIFT

(11) **EP 1 979 645 B1**
(45) Veröffentlichungstag und Bekanntmachung des Hinweises auf die Patenterteilung: **26.09.2012**
(21) Anmeldenummer: 07702858.7
(22) Anmeldetag: 18.01.2007
(51) Int. Cl.: F16D 65/14, F16D 66/02, F16D 66/00

(54) **VERFAHREN ZUM ANZEIGEN VON VERSCHLEISS ZUMINDEST EINES BREMSBELAGS BEI EINER SCHEIBENBREMSE MIT ELEKTROMOTORISCHEM AKTUATOR**
METHOD FOR INDICATING WEAR OF A BRAKE LINING IN A DISK BRAKE WITH AN ELECTRIC MOTOR ACTUATOR
PROCEDE POUR INDIQUER L'USURE D'UNE GARNITURE DE FREIN DANS UN FREIN À DISQUES AU MOYEN D'UNE SERVOCOMMANDE DE MOTEUR ELECTRIQUE

(30) Priorität: 18.01.2006 DE 102006002307
(43) Veröffentlichungstag der Anmeldung: 15.10.2008
(73) Patentinhaber: KNORR-BREMSE Systeme für Nutzfahrzeuge GmbH, 80809 München (DE)
(72) Erfinder: LINKE, Tobias, 81827 München (DE); STÖHR, Markus, 80993 München (DE)
(74) Vertreter: Mattusch, Gundula
(86) Internationale Anmeldenummer: PCT/EP2007/000410
(87) Internationale Veröffentlichungsnummer: WO 2007/082743

(56) Entgegenhaltungen:
- DE-A1- 19 910 048
- DE-C1- 19 625 400
- US-A- 5 692 586

## Beschreibung

Die Erfindung betrifft ein Verfahren zum Anzeigen von Verschleiß zumindest eines Bremsbelags bei einer Scheibenbremse mit elektromotorischem Aktuator, eine Vorrichtung zur Durchführung dieses Verfahrens und eine entsprechende Scheibenbremse.

Bremsbeläge unterliegen bekanntermaßen einem Verschleiß. Sie sollten gemäß Wartungsanweisung von Fahrzeugen regelmäßig überprüft und bei einem bestimmten Verschleißgrad gewechselt werden, bevor Schäden an den zugehörigen Bremsteilen entstehen und durch verminderte oder nicht mehr vorhandene Bremswirkung eine Unfallgefahr auftritt.

Demzufolge sind zum Beispiel hydraulisch oder pneumatisch zugespannte Scheibenbremsen mit einem Sensor ausgerüstet, der in Ausbildung eines Potentiometers einen Verschleißwert der Bremsbeläge erfasst und diesen als einen proportionalen elektrischen Spannungswert an ein übergeordnetes System überträgt. Dieses System weist eine Anzeige auf, mit welcher dem Fahrer beispielsweise ein fälliger Wechsel der Bremsbeläge früh genug angezeigt wird. Für die Sensierung des Verschleißwertes ist jedoch eine zusätzliche Komponente erforderlich. Es sind auch Schleifkontakte für eine Belag-Endverschleißanzeige bekannt, bei welchen der Nachteil besteht, dass sie bei Belagwechsel erneuert werden müssen.

Alle diese Ausführungen erfordern zusätzliche Teile, deren Installation und Neubeschaffung bei Wechsel entsprechende Mehrkosten erzeugen, zumal für Bremsbeläge eine relativ hohe Wechselhäufigkeit besteht.

Scheibenbremsen mit Einwirkung von elektromotorischen Aktuatoren auf eine Zuspannvorrichtung zur Erzeugung einer Kraft auf die jeweiligen Bremsbeläge für einen Bremsvorgang sind bereits bekannt. Hierbei ist es zum Beispiel üblich, eine Nachstellung des Bremsbelags auf Grund eines Verschleißes desselben durch den elektromotorischen Aktuator und/oder eine Nachstellvorrichtung mit einem zusätzlichen Nachstellmotor automatisch vorzunehmen.

Die DE-A-19910048 zeigt den nächstkommenden stand der Tecknik, siche Oberbegriff des jeweiligen unabhängigen Anspruchs 1bzw. 8.

Die Aufgabe der vorliegenden Erfindung besteht darin, ein Verfahren zum Anzeigen von Verschleiß zumindest eines Bremsbelags bei einer Scheibenbremse mit elektromotorischem Aktuator zu verbessern, bei dem die oben genannten Nachteile nicht mehr auftreten.

Eine weitere Aufgabe der Erfindung ist es, eine Vorrichtung für das erfindungsgemäße Verfahren zu schaffen, sowie eine Scheibenbremse mit dieser Vorrichtung.

Erfindungsgemäß werden diese Aufgaben mit den Merkmalen der Ansprüche 1, 8 und 11 gelöst.

Vorteilhafte Ausgestaltungen sind den Unteransprüchen zu entnehmen.

Besonders vorteilhaft ist es, dass die Erfindung keine zusätzlichen Sensoren bzw. Komponenten benötigt. Das erfindungsgemäße Verfahren zeichnet sich unter anderem dadurch aus, dass es vorhandene Bauteile zur Ermittlung eines Verschleißes von Bremsbelägen der Scheibenbremse verwendet.

Es ist besonders vorteilhaft wenn der elektromotorische Aktuator der Scheibenbremse, die auch in selbstverstärkender Bauart ausgelegt sein kann, zur Ermittlung des Bremsbelagverschleißes benutzt wird, da dieser Aktuator als Positionier- oder Stellmotor derartig ausgebildet ist, dass die Position seiner Abtriebswelle für seine Steuerung erfasst wird. Diese Positionswerte sind in einem zugehörigen Bremssteuergerät vorhanden und können vorteilhaft zur Ermittlung eines Verschleißes der Bremsbeläge herangezogen werden.

Ein Verfahren gemäß der Erfindung zum Anzeigen von Verschleiß zumindest eines Bremsbelags bei einer Scheibenbremse mit elektromotorischem Aktuator, weist folgende Verfahrensschritte auf:
(i) Addieren von Verschleißnachstellwegen des elektromotorischen Aktuators oder/und eines Nachstellmotors; und
(ii) Anzeigen der so erhaltenen Summe von Verschleißnachstellwegen als Verschleiß mindestens eines Bremsbelags.

Gegebenenfalls ist eine vorteilhafte Übertragung des/der Verschleißwerte/s an ein übergeordnetes System (Zentralbremssteuerung /Instrument) zur weiteren Anzeige für den Fahrer realisierbar. Die Anzeige erfolgt dann durch ein anderes System (Instrument, Dashboard) und das Bremssystem stellt die Information zur Verfügung (z.B. per CAN, LIN).

Dieses ist besonders vorteilhaft, da bei einer automatischen Verschleißnachstellung entsprechende Werte zur Nachstellung in einem übergeordneten System, zum Beispiel im Bremssteuergerät, bereits vorliegen und zusätzlich für eine Anzeige von Verschleiß ausgewertet werden können.

Dazu wird in einer Ausführungsform der Verschleißnachstellweg durch eine Position des elektromotorischen Aktuators oder/und des Nachstellmotors ermittelt. Dieses ist aufgrund der vorliegenden Positionswerte für die Steuerung eines solchen Motors besonders einfach. Dazu wird in einfacher Weise die Position des elektromotorischen Aktuators oder/und des Nachstellmotors in Relation zu einer Referenzposition bestimmt. Diese Datenwerte liegen in einer digitalen Form in dem Bremssteuergerät vor. Ihre Auswertung mittels einfacher Bearbeitung, beispielsweise durch Softwareanweisungen, ist vorteilhaft.

Es ist weiterhin vorteilhaft, dass in bevorzugter Ausgestaltung die Referenzposition in vorgebbaren Zeitabständen zum Vermeiden von Positionsverlust eingenommen wird. Dadurch lässt sich der aktuelle Positionswert des elektromotorischen Aktuators leicht bestätigen bzw. korrigieren.

In einer weiteren Ausführungsform ist vorgesehen, dass der Verschleißnachstellweg des elektromotorischen Aktuators mit folgenden Teilschritten ermittelt wird:
(1.1) Erfassen einer ersten Position vor einem Zustellen des Bremsbelags;
(1.2) Erfassen einer zweiten Position nach einem Lüften bzw. Zurückstellen des Bremsbelags;
(1.3) Ermitteln des Verschleißnachstellwegs durch Vergleichen der ersten Position mit der zweiten Position, wobei das Lüften bzw. Zurückstellen des Bremsbelags über einen konstanten Weg erfolgt.

Dadurch lässt sich mit Hilfe der Positionswerte des Aktuators der Verschleißnachstellweg für den Verschleißwert leicht ermitteln. Dieses ist besonders vorteilhaft, wenn kein geeigneter Wert zur Weiterverarbeitung im Bremssteuergerät vorliegt. Dazu wird in einer bevorzugten Ausführungsform das Ermitteln des Verschleißnachstellwegs in vorgebbaren Abständen in Abhängigkeit eines zeitlichen und/oder betrieblichen Parameters der Scheibenbremse ausgeführt. Somit kann der Verschleißwert in ausreichender zeitlicher Kontinuität ermittelt werden. Dadurch wird es außerdem in einer weiteren Ausgestaltung ermöglicht, dass im Verfahrensschritt (2) Anzeigen eine kontinuierliche Anzeige des Verschleißes des Bremsbelags und/oder eine Anzeige für einen Wechsel des Bremsbelags erfolgt.

Eine erfindungsgemäße Vorrichtung zur Anzeige von Verschleiß zumindest eines Bremsbelags bei einer Scheibenbremse mit elektromotorischem Aktuator, weist Folgendes auf:
- eine Vergleichseinrichtung zum Vergleich von Positionen des elektromotorischen Aktuators oder/und eines Nachstellmotors;
- eine Addiereinrichtung zur Addition von Verschleißnachstellwegen des elektromotorischen Aktuators oder/und eines Nachstellmotors;
- eine Anzeigeeinrichtung zur Anzeige von Verschleiß des Bremsbelags; und
- eine Steuereinrichtung zur Steuerung der Vergleichs-, Addier- und Anzeigeeinrichtung sowie zur Übergabe von Steuersignalen zu Referenzverstellungen des elektromotorischen Aktuators oder/und des Nachstellmotors an das Bremssteuergerät.

In einer weiteren Ausführungsform ist vorgesehen, dass die Vorrichtung zumindest einen Positionsgeber als Referenzposition für die Positionen des elektromotorischen Aktuators oder/und des Nachstellmotors aufweist. Damit kann eine Referenzfahrt des jeweiligen Motors an einen festen Bezugs- bzw. Referenzpunkt erfolgen, der zum Beispiel in der Zuspannvorrichtung als ein Endschalter ausgebildet ist.

Es ist vorteilhaft, dass in einer bevorzugten Ausführungsform die Vergleichs-, Addier- und Steuereinrichtung Bestandteile eines Bremssteuergerätes sind. Da diese Einrichtungen als Software ausgebildet sein können, sind sie vorteilhaft einfach ohne zusätzliche Bauteile und ohne zusätzlichen Installationsaufwand in einem Bremssteuergerät zu implementieren.

Eine andere Ausgestaltung sieht vor, dass der elektromotorische Aktuator oder/und der Nachstellmotor mit einem Messwertgeber zur Positionserkennung ausgerüstet sind. Damit werden auch Fälle abgedeckt, bei denen der Aktuator und der Nachstellmotor keine genaue Positionserkennung auf Grund einfacher Bauweise zulassen. Somit wird der Einsatzbereich der Erfindung vorteilhaft erweitert.

Eine erfindungsgemäße Scheibenbremse mit elektromotorischem Aktuator und einer Anzeige von Verschleiß zumindest eines Bremsbelags weist die erfindungsgemäße Vorrichtung zur Durchführung des erfindungsgemäßen Verfahrens auf.

Nachfolgend wird die Erfindung anhand der in den schematischen Figuren der Zeichnung angegebenen Ausführungsbeispiele näher erläutert. Es zeigt dabei:
- Figur 1: eine schematische Prinzipdarstellung einer ersten erfindungsgemäßen Ausführungsform einer Scheibenbremse ;
- Figur 2: eine schematische Prinzipdarstellung einer zweiten erfindungsgemäßen Ausführungsform der Scheibenbremse;
- Figur 3: eine Diagrammdarstellung zur Erläuterung der Ermittlung eines Verschleißweges an einem Bremsbelag; und
- Figur 4: ein beispielhaftes Blockdiagramm einer erfindungsgemäßen Vorrichtung.

Gleiche Bezugszeichen gelten für Teile mit gleicher oder ähnlicher Funktion.

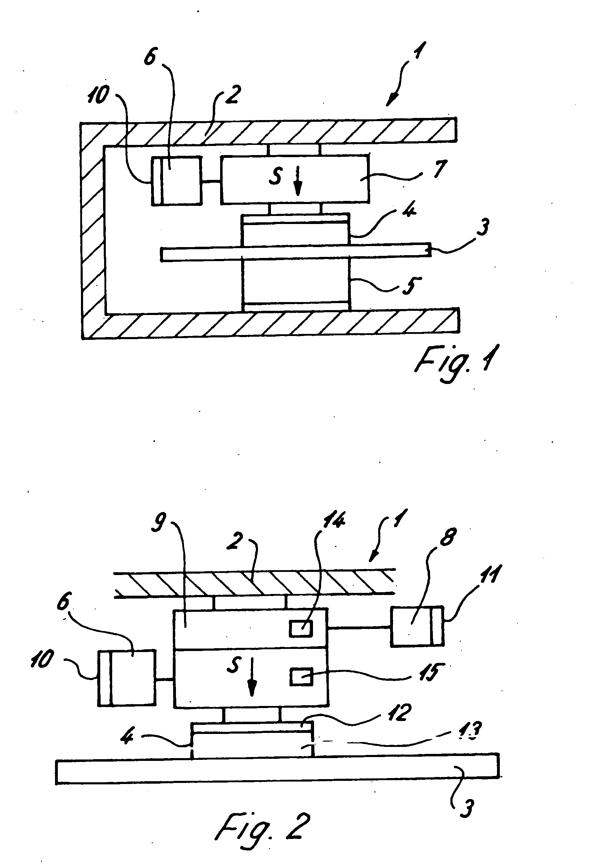

Die Fig. 1 zeigt eine schematische Prinzipdarstellung einer ersten erfindungsgemäßen Ausführungsform einer Scheibenbremse 1. An einer Bremsscheibe 3 sind beidseitig ein erster und ein zweiter Bremsbelag 4 und 5 angeordnet. Ein Bremssattel 2 umgibt die Bremsbeläge 4 und 5 und die Bremsscheibe 3. In ihm ist auf einer Seite (hier auf der unteren) der zweite Bremsbelag 5 abgestützt, während auf der anderen Seite (hier auf der oberen) der erste Bremsbelag 4 über eine Zuspannvorrichtung 7 an dem Bremssattel 2 abgestützt ist. Es kann sich hierbei um einen Schiebesattel handeln, aber die Erfindung ist nicht auf dieses Beispiel beschränkt.

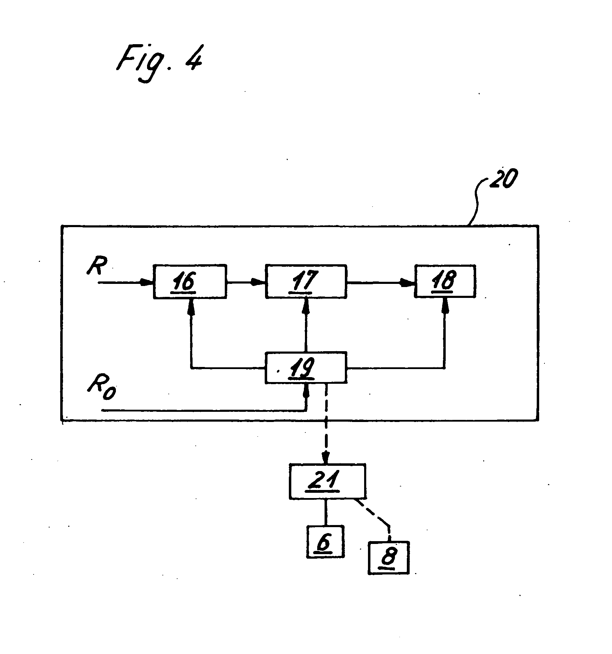

Die Zuspannvorrichtung 7 ist mit einem elektromotorischen Aktuator 6 verbunden. Der elektromotorische Aktuator 6 ist in diesem Beispiel ein Stellmotor, der einen eigenen ersten Messwertgeber 10 aufweist, wobei der erste Messwertgeber 10 eine Information proportional zur Winkelposition der Abtriebswelle des Aktuators 6 über eine nicht dargestellte elektrische Verbindung an ein übergeordnetes, ebenfalls hier nicht gezeigtes Bremssteuergerät 21 (siehe auch Fig. 4) überträgt. Der elektromotorische Aktuator 6 ist über eine nicht gezeigte elektrische Verbindung an dem Bremssteuergerät 21 (siehe Fig. 4) angeschlossen, über welche er mit elektrischer Energie versorgt wird.

Die Zuspannvorrichtung 7 ist zum Beispiel als ein Getriebe ausgebildet, welches die Drehbewegung des elektromotorischen Aktuators 6 in eine Längsbewegung in Pfeilrichtung des Wegs S in Richtung auf die Bremsscheibe 3 umsetzt. Hierbei wird eine so genannte Zuspannkraft zur Bremsung der Drehung der Bremsscheibe 3 und somit des damit verbundenen Rads eines Fahrzeugs aufgebracht.

Bei jeder Bremsung wird eine Verschleißschicht 13 auf einem Träger 12, wie in Figur 2 gezeigt ist, durch die abzubremsende Drehung der Bremsscheibe 3 beansprucht und in einem bestimmten Maß abgerieben. Dadurch wird der Weg S zur Zustellung der Bremsbeläge 4, 5 größer. Zur Kompensation dieses Wegs wird eine automatische Nachstellung durch den elektromotorischen Aktuator 6 vorgenommen, welche über das Bremssteuergerät 21 auf Grund nicht weiter erläuterter Positionsmessungen des Verstellweges des Aktuators 6 in Bezug auf eine feste Referenz gesteuert wird.

In Fig. 2 wird eine zweite erfindungsgemäße Ausführungsform der Scheibenbremse 1 gezeigt, bei welcher eine solche Verschleißnachstellung von einem zusätzlichen Nachstellmotor 8 ausgeführt wird, der mit einem zugehörigen Nachstellgetriebe 9 in Zusammenwirkung gekoppelt ist. Das Nachstellgetriebe 9 ist in dem Kraftverlauf der Zuspannvorrichtung 7 und somit im Weg S angeordnet.

Ein durch den Verschleiß der Verschleißschicht 13 des hier aus Gründen der Übersichtlichkeit nur einen dargestellten ersten Bremsbelags 4 bewirkter verlängerter Zustellweg zum Anpressen des Bremsbelags 4 auf die Bremsscheibe 3 wird durch das Nachstellgetriebe 9 vom Nachstellmotor 8 angetrieben kompensiert.

Das Nachstellgetriebe 9 kann beispielsweise ein Keilgetriebe sein, das vom Nachstellmotor 8 mittels eines Spindel-/Spindelmuttergetriebes verstellt wird. Auch der Nachstellmotor 8 weist in diesem Beispiel einen zweiten Messwertgeber zur Positionserkennung des Winkels der Abtriebswelle des Nachstellmotors 8 und somit eines Maßes für die Nachstellung auf.

Die Nachstellung über den Nachstellmotor 8 erfolgt ebenfalls über das Bremssteuergerät 21, mit dem er in gleicher Weise wie der elektromotorische Aktuator 6 elektrisch verbunden ist (nicht gezeigt, siehe Fig. 4).

Die Funktion der Nachstellung erfolgt beispielsweise derart, dass das Bremssteuergerät 21 anhand der Messwerte des ersten Messwertgebers 10 einen größeren Verstellweg zum Zuspannen des Bremsbelags 4 erkennt und diesen zusätzlichen Verstellweg über den Nachstellmotor mit Hilfe des zweiten Messwertgebers 11 durch die Verstellung des Nachstellgetriebes kompensiert.

Als Referenzen, die als Bezugsnormale für die Messung der Verstellwege dienen, sind in den Getrieben 7 und 9 erste und zweite Positionsgeber 14, 15 angeordnet, die beispielsweise als Endschalter ausgeführt sind. Sie können zum Beispiel durch Bauteile der Getriebe 7 und 9 in bestimmten Positionen in einfacher Weise betätigt werden und einen Schaltimpuls zur Referenzbildung an das Bremssteuergerät 21 über die gemeinsame elektrische Verbindung zu diesem übertragen.

Erfindungsgemäß ist nun vorgesehen, dass die Positionswerte, zum Beispiel des elektromotorischen Aktuators 6, zur Ermittlung des Verschleißes der Bremsbeläge 4, 5 verwendet werden. Auch eine Kombination zusammen mit dem Nachstellmotor 8 oder nur mit dem Nachstellmotor 8 allein ist möglich.

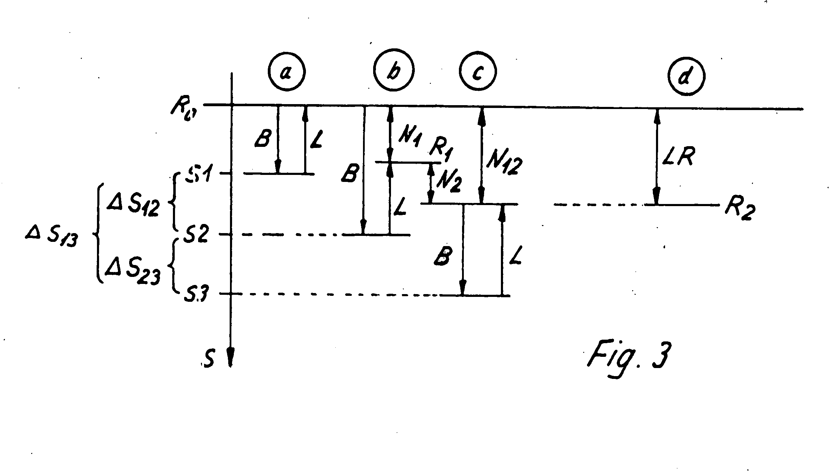

Anhand der Fig. 3, welche eine Diagrammdarstellung zur Erläuterung der Ermittlung des Verschleißweges an einem Bremsbelag 4 ist, soll nun gezeigt werden, wie erfindungsgemäß der Verschleiß des Bremsbelags 4 für eine Anzeige ermittelt und aufbereitet wird.

In Übereinstimmung mit der Richtung des Wegs S nach Fig. 1 und 2 ist dieser in gleicher Richtung nach unten von einer Referenzposition Ro an in Fig. 3 aufgetragen. Diese Referenzposition Ro wird zum Beispiel von dem Positionsgeber 14, 15 gebildet, die bei Neueinbau von Bremsbelägen als Ausgangsposition eingenommen wird.

Es wird zunächst die Situation a betrachtet. Bei einer erstmaligen Bremsung erfolgt ein Zustellen B des Bremsbelags 4 zur Bremsscheibe 3 (Fig. 1, 2) um einen Weg, der mit der Bezeichnung S 1 versehen ist. Nach erfolgter Bremsung wird der Bremsbelag 4 gelöst bzw. gelüftet, wobei ein Lüften L um einen bestimmten Weg zurück zur Ausgangsposition, hier Referenzposition Ro, erfolgt. Der Weg S 1 ist proportional zu einem Verdrehwinkel des elektromotorischen Aktuators 6 bzw. Nachstellmotors 8. Somit sind diese Motoren 6 und 8 exakt hinsichtlich des Drehwinkels ihrer Abtriebswellen einstell- und auch regelbar.

Ist nun nach einigen Bremsungen die Verschleißschicht des Bremsbelags 4 um ein bestimmtes Maß abgerieben, so muss ein größerer Weg zugestellt werden, um eine Bremsung nach dem Weg S2 zu erreichen. Dieses zeigt Situation b. Der Weg des Zustellens B ist hier auf den Weg S2 auf Grund des Verschleißes ΔS₁₂ angewachsen. Es erfolgt nun zum Beispiel ein Verstellen des elektromotorischen Aktuators 6 auf eine neue Ausgangsposition R1, die von der Referenzposition Ro um den Verschleißnachstellweg N₁ entfernt ist. Dieser Verschleißnachstellweg N₁ ist ein Maß mit Bezug auf die Referenzposition Ro für den Verschleiß ΔS₁₂ des Bremsbelags 4. Nach der Bremsung wird der Bremsbelag 4 wieder um dasselbe Maß L gelüftet, so dass die neue Ausgangsposition R 1 erreicht wird.

Die Ausgangsposition R1 und die Referenzposition Ro entsprechen jeweils bestimmten Winkeln der Abtriebswelle des elektromotorischen Aktuators 6, welche im Bremssteuergerät 21 vorhanden und somit auch weiter verarbeitbar sind. Zum Beispiel entspricht die Differenz R1 - Ro dem Verschleißnachstellweg N₁.

In der Situation c hat sich ein größerer Verschleiß ΔS₂₃ ergeben. Das Zustellen B muss auf den Weg S3 vergrößert werden. Ein zugehöriger Verschleißnachstellweg N₂ ergibt sich aus der Differenz von einer neuen Ausgangsposition R2 zu der alten Ausgangsposition R1. Der gesamte Verschleißnachstellweg N₁₂ ergibt sich als Summe aus den beiden Verschleißnachstellwegen N₁ und N₂.

Auf diese Weise ergibt sich in Situation c ein gesamter Verschleiß ΔS₁₃ durch die Addition der einzelnen Verschleißnachstellwege N, die im Bremssteuergerät 21 als Datenwerte vorhanden sind. Diese Summe kann als ganze Summe als ein Endverschleißwert dem Fahrer angezeigt werden, wie weiter unten noch ausführlicher beschrieben wird. Es ist aber auch möglich, dass die einzelnen Verschleißnachstellwege als quasi kontinuierliche Verschleißanzeige dargestellt werden.

Zur Plausibilisierung der einzelnen Ausgangspositionen R1, R2 dient ein Lüftreferenzweg LR in Situation d, der jeweils von einer Ausgangsposition R1, R2 zur Referenzposition Ro ausgeführt werden kann, um Positionsungenauigkeiten zu verhindern. Diese so genannte "Referenzfahrt" kann der Aktuator 6 bzw. der Nachstellmotor 8 immer dann ausführen, wenn keine Bremsung erforderlich ist.

Alternativ zur Verschleißanzeige kann aus den Daten auch die Reststandzeit (Belagreststärke) abgeleitet werden.

Fig. 4 zeigt ein beispielhaftes Blockdiagramm einer erfindungsgemäßen Vorrichtung 20. Sie besteht aus einer Vergleichseinrichtung 16, einer an dieser angeschlossenen Addiereinrichtung 17, an welche eine Anzeigeeinrichtung 18 angeschlossen ist. Alle diese Einrichtungen 16, 17, 18 sind mit einer Steuereinrichtung 19 verbunden.

Die Vergleichseinrichtung 16 erhält an ihrem Eingang die jeweilige Datenwerte für die Motorpositionen R, welche sie untereinander vergleicht, um die Verschleißnachstellwege N zu bestimmen, welche dann in der Addiereinrichtung 17 zum gesamten Verschleißnachstellweg N addiert werden, der dann als ein Maß für den Endverschleißwert in der Anzeigeeinrichtung 18 dem Fahrer angezeigt wird.

Die Steuereinrichtung 19 steuert diese Einrichtungen 16, 17, 18 mit Einbeziehen der Referenzposition Ro, wobei sie auch mit dem Bremssteuergerät 21 in Verbindung steht, um Referenzfahrten der Motoren 6, 8 auszulösen, wie durch die gestrichelte Linie dargestellt ist.

Dieses ist nur ein mögliches Beispiel einer erfindungsgemäßen Vorrichtung, bei welcher die Motorpositionen R ausgewertet werden. Anstelle dieser Positionen ist eine Eingabe von direkt in die Addiereinrichtung 17 möglich, was nicht dargestellt ist. Dabei werden die Verschleißnachstellwege N von dem Bremssteuergerät 21 zur Verfügung gestellt bzw. einfach abgerufen.

In bevorzugter Ausgestaltung ist die Vorrichtung 20 Bestandteil des Bremssteuergeräts 21, vorzugsweise der Software desselben.

Mit dem erfindungsgemäßen Verfahren, das mittels der erfindungsgemäßen Vorrichtung durchgeführt werden kann, wird ein vorhandener elektromotorischer Aktuator 6 für Zuspannkraft oder/und ein Nachstellmotor 8 zur Verschleißnachstellung als Sensor verwendet. Die Übertragung der Datenwerte vom Motor 6, 8 zum bzw. im Bremssteuergerät 21 und zur Anzeigeeinrichtung 18 erfolgen über ein Kommunikationsschnittstelle, beispielsweise CAN, LIN oder Flexray.

Die erfindungsgemäße Scheibenbremse weist folgende Vorteile auf:
- kein kostspieliger Positionssensor
- vorhandene Bauteile werden verwendet
- Übertragung der Datenwerte über vorhanden Bussysteme und Schnittstellen
- kein Tausch von Bauteilen (so genannten Belagverschleißchips) bei Belagwechsel
- einfache Implementation der Vorrichtung als Software in vorhandenes Bremssteuergerät
- Schutz vor Positionsverlust durch Referenzposition oder/und kostengünstigen Positionsgeber
- kontinuierliche und/oder Endverschleißanzeige

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

So kann zum Beispiel die Anzeige für den Fahrer als eine kontinuierliche Anzeige ausgebildet sein, indem zeitliche Abstände der Bearbeitung von Positionswerten so klein gestaltet sind, dass eine kontinuierliche Anzeige, zum Beispiel als Balkenanzeige oder dgl. möglich ist.

Motoren können auch mit zusätzlichen Messwertgebern ausgestattet werden, um zum Beispiel die Genauigkeit zu erhöhen.

Es ist auch möglich, über geeignete Schnittstellen einen Verlauf des Bremsbelagverschleißes im Rahmen einer so genannten Black-Box zur Rekonstruktion von Unfällen aufzuzeichnen.

### Bezugszeichenliste

- 1: Scheibenbremse
- 2: Bremssattel
- 3: Bremsscheibe
- 4: Erster Bremsbelag
- 5: Zweiter Bremsbelag
- 6: Elektromotorischer Aktuator
- 7: Zuspannvorrichtung
- 8: Nachstellmotor
- 9: Nachstellvorrichtung
- 10: Erster Messwertgeber
- 11: Zweiter Messwertgeber
- 12: Träger
- 13: Verschleißschicht
- 14: Erster Positionsgeber
- 15: Zweiter Positionsgeber
- 16: Vergleichseinrichtung
- 17: Addiereinrichtung
- 18: Anzeigeeinrichtung
- 19: Steuereinrichtung
- 20: Vorrichtung
- 21: Bremssteuergerät
- B: Zustellen
- L: Lüften
- LR: Lüftreferenzweg
- N, N₁, N₂, N₁₂: Verschleißnachstellweg
- R, R1, R2: Position
- Ro: Referenzposition
- S, S1, S2, S3: Weg
- ΔS₁₂, ΔS₁₃, ΔS₁₃: Verschleiß

## Patentansprüche

1. Verfahren zum Anzeigen von Verschleiß bzw. Restbelagstärke zumindest eines Bremsbelags (4) bei einer Scheibenbremse (1) mit elektromotorischem Aktuator (6), gekennzeichnent durch folgende Verfahrensschritte :
(i) Addieren von Verschleißnachstellwegen (N₁, N₂) des elektromotorischen Aktuators (6) oder/und eines Nachstellmotors (8); und
(ii) Anzeigen der so erhaltenen Summe von Verschleißnachstellwegen (N₁₎ N₂) als Verschleiß des Bremsbelags (4).

2. Verfahren nach Anspruch 1, **dadurch gekennzeichnet, dass** der Verschleißnachstellweg (N1) durch eine Position (R1, R2) des elektromotorischen Aktuators (6) oder/und des Nachstellmotors (8) ermittelt wird.

3. Verfahren nach Anspruch 2, **dadurch gekennzeichnet, dass** die Position (R1, R2) des elektromotorischen Aktuators (6) oder/und des Nachstellmotors (8) in Relation zu einer Referenzposition (Ro) bestimmt wird.

4. Verfahren nach Anspruch 3, **dadurch gekennzeichnet, dass** die Referenzposition (Ro) in vorgebbaren Zeitabständen (alternativ und oder Anzahl von Bremsungen) zum Vermeiden von Positionsverlust eingenommen wird.

5. Verfahren nach einem der Ansprüche 2 bis 4, **dadurch gekennzeichnet, dass** der Verschleißnachstellweg (N₁, N₂) des elektromotorischen Aktuators (6) mit folgenden Teilsehritten ermitteit wird:
(1.1) Erfassen einer ersten Position (R1) vor einem Zustellen (B) des Bremsbelags (4);
(1.2) Erfassen einer zweiten Position (R2) nach einem Lüften (L) des Bremsbelags (4);
(1.3) Ermitteln des Verschleißnachstellwegs (N₁, N₂) durch Vergleichen der ersten Position (R1) mit der zweiten Position (R2),
wobei das Lüften (L) des Bremsbelags (4) ein konstanter Weg ist.

6. Verfahren nach Anspruch 5, **dadurch gekennzeichnet, dass** das Ermitteln des Verschleißnachstellwegs (N1, N2) in vorgebbaren Abständen in Abhängigkeit eines zeitlichen und/oder betrieblichen Parameters der Scheibenbremse (1) erfolgt.

7. Verfahren nach einem der Ansprüche 1 bis 6, **dadurch gekennzeichnet, dass** im Verfahrensschritt (2) Anzeigen eine kontinuierliche Anzeige des Verschleißes des Bremsbelags (4) und/oder eine Anzeige für einen Wechsel des Bremsbelags (4) erfolgt.

8. Vorrichtung (20) zur Anzeige von Verschleiß zumindest eines Bremsbelags (4) bei einer Scheibenbremse (1) mit elektromotorischem Aktuator (6), wobei die Vorrichtung Folgendes aufweist:
- eine Anzeigeeinrichtung (18) zur Anzeige von Verschleiß des Bremsbelags (4);
- eine Vergleichseinrichtung (16) zum Vergleich von Positionen (R 1, R2) des elektromotorischen Aktuators (6) oder/und eines Nachstellmotors (8),
**gekennzeichnet dadurch, daß** sie weiterhin aufweist
- eine Addiereinrichtung (17) zur Addition von Verschleißnachstellwegen (N₁, N₂) des elektromotorischen Aktuators (6) oder/und eines Nachstellmotors (8); und
- eine Steuereinrichtung (19) zur Steuerung der Vergleichs- (16), Addier-(17) und Anzeigeeinrichtung (18), sowie zur Übergabe von Steuersignalen zu Referenzverstellungen des elektromotorischen Aktuators (6) oder/und des Nachstellmotors (8) an das Bremssteuergerät (21).

9. Vorrichtung (20) nach Anspruch 8, **dadurch gekennzeichnet, dass** die Vorrichtung zumindest einen Positionsgeber (14, 15) als Referenzposition für die Positionen (R0 oder R1 oder R2) des elektromotorischen Aktuators (6) oder/und des Nachstellmotors (8) aufweist.

10. Vorrichtung (20) nach Anspruch 8 oder 9, **dadurch gekennzeichnet, dass** die Vergleichs- (16), Addier- (17) und Steuereinrichtung (19) Bestandteile eines Bremssteuergerätes (21) sind.

11. Vorrichtung (20) nach einem der Ansprüche 8 bis 10, **dadurch gekennzeichnet, dass** der elektromotorische Aktuator (6) oder/und der Nachstellmotor (8) mit einem Messwertgeber (10, 11) zur Positionserkennung ausgerüstet sind.

12. Scheibenbremse (1) mit elektromotorischem Aktuator (6) und einer Anzeige von Verschleiß zumindest eines Bremsbelags (4), **dadurch gekennzeichnet, dass** die Scheibenbremse (1) die Vorrichtung nach einem der Ansprüche 8 bis 10 zur Durchführung des Verfahrens nach einem der Ansprüche 1 bis 7 aufweist.

## Claims

1. A method for indicating the wear or residual brake lining thickness of at least one brake lining (4) in a disc brake (1) with an electric motor actuator (6), **characterised by** the following method steps:
(i) adding of wear adjustment travels (N₁, N₂) of the electric motor actuator (6) or/and of an adjustment motor (8); and
(ii) indicating the sum of wear adjustment travels (N₁, N₂) thus obtained as the wear of the brake lining (4).

2. A method according to claim 1, **characterised in that** the wear adjustment travel (N1) is determined through a position (R1, R2) of the electric motor actuator (6) or/and of the adjustment motor (8).

3. A method according to claim 2, **characterised in that** the position (R1, R2) of the electric motor actuator (6) or/and of the adjustment motor (8) is determined in relation to a reference position (Ro).

4. A method according to claim 3, **characterised in that** the reference position (Ro) is assumed at predefined time intervals (alternatively and or number of brakings) in order to avoid a loss of position.

5. A method according to one of claims 2 to 4, **characterised in that** the wear adjustment travel (N₁, N₂) of the electric motor actuator (6) is determined with the following partial steps:
(1.1) registering of a first position (R1) prior to a closing movement (B) of the brake lining (4);
(1.2) registering of a second position (R2) after a lifting (L) of the brake lining (4);
(1.3) determination of the wear adjustment travel (N₁, N₂) through comparison of the first position (R1) with the second position (R2),
the lift (L) of the brake lining (4) being a constant travel.

6. A method according to claim 5, **characterised in that** the wear adjustment travel (N₁, N₂) is determined at predefined intervals as a function of a time and/or operating parameter of the disc brake (1).

7. A method according to one of claims 1 to 6, **characterised in that** a continuous display of the wear of the brake lining (4) and/or a display for a change of the brake lining (4) occurs in step (2) of the method.

8. A device (20) for indicating the wear of at least one brake lining (4) in a disc brake (1) with an electric motor actuator (6), the device comprising the following:
- a display instrument (18) for displaying wear of the brake lining (4);
- a comparator instrument (16) for comparing positions (R1, R2) of the electric motor actuator (6) or/and of an adjustment motor (8),
**characterised in that** it further comprises
- an adding instrument (17) for adding wear adjustment travels (N₁. N₂) of the electric motor actuator (6) or/and of an adjustment motor (8); and
- a control instrument (19) for controlling the comparator instrument (16), the adding instrument (17) and the display instrument (18) and for transmitting control signals for reference adjustments of the electric motor actuator (6) or/and of the adjustment motor (8) to the brake control unit (21).

9. A device (20) according to claim 8, **characterised in that** the device has at least one position sensor (14, 15) as reference position for the positions (R0 or R1 or R2) of the electric motor actuator (6) and/or of the adjustment motor (8).

10. A device (20) according to claim 8 or 9, **characterised in that** the comparator instrument (16), the adding instrument (17) and the control instrument (19) are integral parts of a brake control unit (21).

11. A device (20) according to one of claims 8 to 10, **characterised in that** the electric motor actuator (6) or/and the adjustment motor (8) are equipped with a position-detecting transducer (10, 11).

12. A disc brake (1) with electric motor actuator (6) and indication of the wear of at least one brake lining (4), **characterised in that** the disc brake (1) comprises the device according to one of claims 8 to 10 for performing the method according to one of claims 1 to 7.

## Revendications

1. Procédé à indiquer l'usure ou respectivement l'épaisseur résiduelle de la garniture d'au moins une garniture de frein (4) dans un frein à disque (1) à acteur électromoteur (6), **caractérisé par** les étapes de procédé suivantes:
(i) addition des distances de rattrapage d'usure (N₁, N₂) dudit acteur électromoteur
(ii) indication du total ainsi obtenu des distances de rattrapage d'usure (N₁, N₂) en étant que l'usure de ladite garniture de frein (4).

2. Procédé selon la revendication 1, **caractérisé en ce que** la distance de rattrapage d'usure (N1) est établie par une position (R1, R2) dudit acteur électromoteur (6) ou/et dudit moteur de rattrapage (8).

3. Procédé selon la revendication 2, **caractérisé en ce que** ladite position (R1, R2) dudit acteur électromoteur (6) ou/et dudit moteur de rattrapage (8) est établie en relation à une position de référence (Ro).

4. Procédé selon la revendication 3, **caractérisé en ce que** ladite position de référence R(o) est prise aux intervalles prédéterminables (de façon alternative et/ou nombre des opérations de freinage) afin d'éviter une perte de position.

5. Procédé selon une quelconque des revendications 2 à 4, **caractérisé en ce que** ladite distance de rattrapage d'usure (N1, N2) dudit acteur électromoteur (6) est établie par les étapes partielles suivantes:
(1.1.) détection d'une première position (R1) avant le serrage (B) de ladite garniture de frein (4);
(1.2) détection d'une deuxième position (R2) après une ventilation (L) de ladite garniture de frein (4);
(1.3) détection de la distance de rattrapage de l'usure (N₁, N₂) par comparaison de ladite première position (R1) avec ladite deuxième position (R2),
à la ventilation (L) de ladite garniture de frein (4) étant une trajectoire constante.

6. Procédé selon la revendication 5, **caractérisé en ce que** l'établissement de ladite distance de rattrapage d'usure (N1, N2) aux intervalles prédéterminables se fait en fonction d'un paramètre de temps et/ou de service du frein à disque (1).

7. Procédé selon une quelconque des revendications 1 à 6, **caractérisé en ce qu'**au cours de l'étape (2) "indication", il y a une indication continue de l'usure de ladite garniture de frein (4) et/ou une indication pour un renouvellement de ladite garniture de frein (4).

8. Dispositif (20) à indiquer l'usure d'au moins une garniture de frein (4) dans un frein à disque (1) à acteur électromoteur (6), ce dispositif comprenant les éléments suivants:
- un moyen indicateur (18) à indiquer l'usure de ladite garniture de frein (4);
- un moyen comparateur (16) à comparer des positions (R1, R2) dudit acteur électromoteur (6) ou/et d'un moteur de rattrapage (8),
**caractérisé en ce qu'**il comprend au plus:
- un moyen d'addition (18) pour l'addition des distances de rattrapage d'usure (N1, N2) dudit acteur électromoteur (6) ou/et d'un moteur de rattrapage (8); et
- un moyen de commande (19) à commander lesdits moyens comparateur (16), d'addition (17) et d'indication (18) ainsi que pour le transfert des signaux de commande pour les ajustements de référence dudit acteur électromoteur (6) ou/et dudit moteur de rattrapage (8) à ladite unité de commande de freinage (21).

9. Dispositif (20) selon la revendication 8, **caractérisé en ce que** le dispositif comprend au moins un transmetteur de position (14, 15) en tant que position de référence pour les positions (R0 ou R1 ou R2) dudit acteur électromoteur (6) ou/et dudit moteur de rattrapage (8).

10. Dispositif (20) selon la revendication 8 ou 9, **caractérisé en ce que** lesdits moyens comparateur (16), d'addition (17) et de commande (19) sont des composants d'un dispositif de commande de freinage (21).

11. Dispositif (20) selon une quelconque des revendications 8 à 10, **caractérisé en ce que** ledit acteur électromoteur (6) ou/et ledit moteur de rattrapage (8) sont munis d'un capteur de mesure (10, 11) pour la détection de la position.

12. Frein à disque (1) à un acteur électromoteur (6) et à un moyen indicateur de l'usure d'au moins une garniture de frein (4), **caractérisé en ce que** le frein à disque (1) comprend le dispositif selon une quelconque des revendications 8 à 10 pour la réalisation du procédé selon une quelconque des revendications 1 à 7.
